# EUROPEAN PATENT SPECIFICATION

(11) **EP 4 136 462 B1**
(45) Date of publication and mention of the grant of the patent: **26.03.2025**
(21) Application number: 21717887.0
(22) Date of filing: 12.04.2021
(51) Int. Cl.: G01N 35/10

(54) **AUTOMATIC SAMPLING METHOD FOR HANDLING WHOLE BLOOD**
AUTOMATISCHES PROBENAHMEVERFAHREN ZUR HANDHABUNG VON VOLLBLUT
PROCÉDÉ DE PRÉLÈVEMENT AUTOMATIQUE POUR LA MANIPULATION DE SANG TOTAL

(30) Priority: 17.04.2020 EP 20170158
(43) Date of publication of application: 22.02.2023
(60) Divisional application: 25159134.3
(73) Proprietor: BIOMÉRIEUX, 69280 Marcy L'Etoile (FR)
(72) Inventor: BLASCO, Patrick, 69670 VAUGNERAY (FR); CIARPAGLINI, Ledi, 50126 FIRENZE (IT); DUFOUR, Laurent, 69690 COURZIEU (FR); DUPRET-CARRUEL, Jacqueline, 69006 LYON (FR); ROSSI, Veronica, 50139 FIRENZE (IT); SANESI, Antonio, 50126 FIRENZE (IT)
(74) Representative: bioMérieux PI Groupement mandataires
(86) International application number: PCT/EP2021/059425
(87) International publication number: WO 2021/209378

(56) References cited:
- EP-A1- 0 527 059
- EP-A2- 0 981 048
- EP-A2- 2 006 689
- EP-B1- 0 527 059
- US-A- 5 555 767
- US-A1- 2006 040 403
- US-A1- 2016 045 911

## Description

### Technical Field

The invention relates to an automatic sampling method for handling non-homogenous biological samples such as whole blood. More particularly, the automatic sampling method of the invention allows to sample a biological sample that was non-homogenous and to dispense it in a reproducible way, after said biological sample being homogenized for further analysis, thus standardizing the sample status and condition prior to processing it with an automated device.

The automatic sampling method according to the invention can be preferably implemented in a device for in vitro detection and/or quantification of at least one analyte in a biological sample. The invention can be used in automated devices for in vitro diagnosis in the clinical field.

For example, the invention can be applied to a known assay (Interferon Gamma Release Assay) consisting in a manual stimulation phase by putting in contact the whole blood cells of the patient with stimulation peptides mimicking mycobacterium tuberculosis bacillus. In case of preliminary contact with the pathogen, the white blood cells of the patient from the blood will induce a secretion of Interferon Gamma during an incubation comprised between 16 and 24 hours at 37°C. After stimulated cells sedimentation, the last step of the assay consists in testing the Interferon Gamma (*IFN-γ*) released.

Nevertheless, the invention could be applied to any field for any assays requiring handling whole blood or non-homogenous biological sample that tends to sediment and needs to be homogenized before further analysis.

### Background

The main problem in handling whole blood or non-homogenous biological sample for analysis is that it has a tendency to sediment. During sedimentation of the whole blood, which contains plasma and formed element such as red blood cells, white cells and platelets, there is a decantation of the red blood cells at the bottom of the collection tube and the white blood cells are going up at the limit between plasma and red blood cells. Therefore, when we want to sample whole blood, a homogenization is mandatory, because if there is no homogenization, the risk is to aspirate a different volume of white blood cells between several blood intakes depending on the depth of the sample intake and particularly if the primary tube is waiting for a long time and if the sedimentation begins. The homogenization that corresponds to a resuspension of the elements is particularly important, as the sedimentation of the blood can be very fast or slow, depending on the characteristics of the patient blood such as the hematocrit. Moreover, whole blood management usually refers to get plasma from primary tube, but for some assays, for testing Interferon Gamma for example, it is needed to keep the cells undamaged, mainly white cells, therefore the homogenization must be carefully done and be reproducible in order to preserve the amount of white cells. Finally, it is mandatory to consider that whole blood and other non-homogenous biological sample is belonging to a category of liquid that is difficult to handle (because of their non-homogeneity) and furthermore in small volume around hundreds of microliters, and never used before as such without preparation/pre-treatment particularly in an automated way.

According to the invention, we use the term "tip" which has to be understood as any means being in contact with the sample and used to aspirate/dispense sample and positioned on the pipette, the tip can be a needle or a tube or any element alike with the same functions, which can be removable or not.

US patent 5,555,767 discloses a prior art automatic sampling method for mixing two liquids by repeatedly aspirating and dispensing them with a pipette.

### Object of the invention

It is an object of the invention to provide a method that enables handling whole blood for assays, said whole blood being directly taken from the patient without any prior treatment and being put in a collection tube or other container ready to use for further analysis. The aim of the method is to enable simple process of the whole blood avoiding any clots or aggregates and without damaging white cells in a reproducible and automatable way. Furthermore, the object of the invention enables an automatic and reproducible pipetting of whole blood cells inside several wells to be tested.

Therefore, the invention relates to an automatic sampling method for non-homogenous biological sample contained in a container, such as a collection tube, said automatic sampling method comprising the following steps:
- providing a device comprising at least one pipetting unit equipped with at least one pipette with a tip, a control unit cooperating and controlling the pipetting unit,
- loading a container containing the non-homogenous biological sample inside the device,
- starting automatic homogenization inside the device, of said non-homogenous biological sample, said homogenization comprising the following substeps :
   - the tip of the pipette dives into the container at a first predetermined depth under the surface of the non-homogenous biological sample,
   - the pipette operates a plurality of cycles of aspirating and dispensing said non-homogenous biological sample into the container, wherein in each cycle the pipette aspirates the biological sample at the first predetermined depth, aspirating the whole volume capacity of the tip and then dispensing it back inside the container, the tip end of the pipette is being kept under the surface of the non-homogenous biological sample at the first predetermined depth during the plurality of cycles.
- sampling a predetermined volume of non-homogenous biological sample once the plurality of cycles is over, by :
   - a first phase of aspirating the predetermined volume of non-homogenous biological sample from the container, wherein the tip is immerged at the first predetermined depth and
   - a second phase of dispensing the predetermined volume previously aspirated, in a well distinct from the container containing the non-homogenous biological sample.

According to one feature of the invention, the non-homogenous biological is whole blood.

The method according to the invention is very advantageous in lot of aspects:
- thanks to the cycles of aspirating/dispensing inside the container at a first predetermined depth and under the surface of the non-homogenous biological sample, the effects of clots, aggregates, foam, decantation are mitigated or even avoided,
- keeping under the surface the tip end of the pipette enables to aspirate only homogenous sample,
- thanks to the plurality of cycles in the homogenization step, a zone of turbulence is generated inside the container allowing re-suspension of the cells present in the non-homogenous biological sample and moving aside aggregates,
- aspirating at the first predetermined depth during sampling step, ensures that only homogenous sample without air is intaken and an homogenous sample will be dispensed in a well for further analysis,
- thanks to homogenization step, the tip end is wet, which minimizes sliding friction and increase precision of volume dispensed,
- thanks to the homogenization step carried out inside the container in an optimized number, at an optimized speed and with an optimized delay between aspiration and dispensing, a reproducible amount intake of the blood cells is possible without damaging said cells.

Advantageously, the demonstration of the dispensing reproducibility in terms of number of white blood cells is carried out via comparative hematocrit measurements on red cells between several wells. The comparative hematocrit measurements are also used to optimize the number and speed of aspiration/dispensing cycles and the delay between aspiration and dispensing in homogenization step.

According to one feature of the invention, the tip of the pipette is the same for the homogenization step and for sampling step.

According to one feature of the invention, the pipette unit carries out preferably between three and twelve cycles of aspirating/dispensing during homogenization step, and more preferably between 6 to 20 cycles of aspirating/dispensing during homogenization step, for a container of 4 mL and a tip volume of 300 µL.

According to one feature of the invention, the homogenization step comprises a substep of equipping the pipette of the pipetting unit with a tip that is positioned in front of the container of the non-homogenous biological sample.

According to one feature of the invention, during homogenization step, the aspiration is carried out at a first predetermined speed, which enables to keep blood cells undamaged. According to one feature of the invention, during homogenization, the dispensing is carried out at a second predetermined speed, which enables to keep blood cells undamaged. Preferably, the first predetermined speed is different from the second predetermined speed. Advantageously, the first predetermined speed is independent from the second predetermined speed.

According to one feature of the invention, the tip of the pipette is changed or cleaned after each sampling step, which allows to control precisely the condition of sampling and to ensure that for several sampling in different wells the external conditions are the same, warranting a reproducible and precise method. Moreover, changing or cleaning tip allows avoiding tip contamination.

Alternatively, the tip of the pipette is the same for several sampling steps and then changed or cleaned, only if the different wells to fill in are empty, in order to avoid tip contamination.

According to one feature of the invention, the method comprises a step of manual inversion of the container prior to the loading in the device. The manual inversion is optional and can improve homogenization step.

According to one feature of the invention, the sampling step is carried out immediately after homogenization step, in order to take advantage of the turbulence zone created by homogenization step and to avoid aspirating aggregates that would converge towards the tip end.

According to one feature of the invention, the volume of non-homogenous biological sample to be aspirated in order to be dispensed in a well for further analysis, may vary in function of the type of the analysis to be carried out and may vary in function of the volume of the tip that equips the pipette. For example, it may be comprised between 200 µL and 400 µL, and more particularly around 300 µL. It has to be noted that if the volume of the tip and/or the volume to sample are inferior to 300 µL, the number of cycles, speed and delay may have to be optimized accordingly (increased probably) and adapted.

According to one feature of the invention, the aspiration during the sampling step can be done in one time or in several time, depending on the determined volume needed and depending on the volume of the tip of the pipette. For example, since the decantation of whole blood can be quite fast, the pipetting of 300 µL in one time enable to shorten the duration of the different pipetting intakes before the beginning of the analysis, compared to two intakes of 200 µL in order to have 400 µL.

According to one feature of the invention, the automatic sampling method further comprises at least one step of liquid level tracking consisting in:
- detecting the liquid height of the non-homogenous biological sample inside the container by a sensor, and
- determining theoretically the first predetermined depth based on said liquid height and/or based on the volume of non-homogenous biological sample to be aspirated/dispensed, and/or based on the volume and size of the container, said determination being carried out by the control unit,
- monitoring movements of the tip end inside the container during homogenization step and/or sampling step and following the liquid height variation inside the tube.

According to one feature of the invention, the term "size" of the container has to be understood as diameter and length, but mainly diameter.

According to one feature of the invention, the at least one step of liquid level tracking can be carried out during aspiration and/or dispensing of homogenization step. According to one feature of the invention, the non-homogenous biological sample is a liquid.

According to this configuration, during homogenization step, the tip end is always immerged in the container and under the surface of the liquid non-homogenous biological sample, taking advantage of the turbulence zone created to aspirate and dispense homogenized liquid and avoiding aspirating air. Moreover, during homogenization step, when the pipette aspirates a part of the non-homogenous biological sample, the tip end follows the level descent of said sample and the level rise of said sample in order to be kept under the surface. In other words, when the pipette aspirates sample, the level of sample decreases in the container, and the tip end goes further deeper inside the container in the non-homogenous biological sample, and when the pipette dispenses non-homogenous biological sample inside the container, the level of non-homogenous biological sample increases in the container and the tip end goes back up.

According to one feature of the invention, the at least one step of liquid level tracking can be carried out during aspiration phase of sampling step.

According to one feature of the invention, the automatic sampling method further comprises at least one step of monitoring comprising the following substeps:
- a detecting substep, wherein at least one sensor is configured to detect pressure or vacuum generated inside the tip end of the pipette during the homogenization step or the sampling step, and to send to control unit at least one pressure value and preferably several pressure values corresponding to detected pressure or vacuum,
- a comparison substep, wherein the control unit compares the at least one pressure value sent with pressure thresholds corresponding to at least one distinctive pressure indicator representative of a characteristic sampling defect, said pressure thresholds being embedded in the control unit and being predetermined by the control unit,
- a determination substep, wherein the control unit determines, based on the comparison substep, if there is a failure of the homogenization step or the sampling step.

According to one feature of the invention, a step of monitoring is carried out during aspiration of homogenization step and/or during dispensing of homogenization step and/or during aspiration phase of sampling step and/or during dispensing phase of sampling step.

According to one feature of the invention, pressure thresholds have been determined and embedded in the control unit previously to carrying out automatic sample method and preferably during feasibility tests.

According to one feature of the invention, said pressure thresholds correspond to at least one distinctive pressure indicators selected among a plurality of pressure indicators possible, the selection being based on the sensitivity of said indicators to sampling defects. In other words, the selected distinctive pressure indicators are the most representative of sampling defects, which are potential failures affecting liquid handling occurring during sampling step or during homogenization step. For example, the sampling defects can be clots, air leak, aggregates, liquid film, foam, bubbles, etc...

Advantageously, for each distinctive pressure indicator correspond at least one pressure threshold.

According to one feature of the invention, the sensor used for measuring pressure during homogenization step is the same than during sampling step. More particularly, the sensor used for measuring pressure during aspiration is the same than during dispensing.

According to one feature of the invention, during the detecting substep, the control unit runs an algorithm that monitors the selected distinctive pressure indicators. Preferably, the algorithm monitors only some of the selected distinctive pressure indicators.

Preferably, some selected distinctive pressure indicators are considered characteristic of sampling defects occurring during aspiration and some others are considered characteristic of sampling defects occurring during dispensing and some others are for both. Advantageously, according to the step aspiration or dispensing during which the monitoring step is carried out, the control unit selects what distinctive pressure indicators are the best to be monitored.

According to one feature of the invention, the distinctive pressure indicator can be a pressure value or a calculation of pressure values calculated by the algorithm embedded in the control unit. For example, a distinctive pressure indicator can be the maximum pressure reached during aspiration, which can be characteristic for clogging during aspiration ; or
scoring checks computed from pressure values can be characteristic of leakage, air intake, foam and / or bubbles.

According to the invention, if the control unit determines that at least one pressure value measured by the sensor, during homogenization step, is over at least one determined pressure threshold corresponding to at least one pressure indicator, the control unit triggers an alarm and homogenization step is automatically stopped. Accordingly, if the control unit determines that at least one pressure value measured by the sensor, during homogenization step, is equal or under at least one determined pressure threshold corresponding to at least one pressure indicator, the control unit homogenization step goes on until sampling step is triggered by control unit at the end of the cycles.

According to the invention, if the control unit determines that at least one pressure value measured by the sensor, during sampling step, is over at least one determined pressure threshold corresponding to at least one of the selected distinctive pressure indicator, the control unit triggers an alarm and sampling step is automatically stopped. Accordingly, if the control unit determines that at least one pressure value measured by the sensor, during sampling step, is equal or under at least one determined pressure threshold corresponding to at least one pressure indicator, the sampling step goes on until the control unit considers that the automatic sampling method is completed and considered achieved.

According to one feature of the invention, the control unit is configured to command a retry mode, consisting in retrying an identified step of the automatic sampling method, said step being identified by the control unit if said step is determined failed by the control unit, because of the correspondence of measured pressure value with at least one determined pressure threshold. Advantageously, the retry mode allows avoiding losing time in carrying out all the method from the beginning, the retry mode is also an advantage in term of automated system productivity and in saving the sample volume : in case of retry mode, the sample is dispensed back, prior carrying out the retry mode.

In the present invention, the designated "identified step" can be homogenization step (aspiration and/or dispensing) or aspiration phase of the sampling step

According to one feature of the invention, in the retry mode, if an aspiration step is to be retried, the tip of pipette dives into the biological sample at a second determined depth, the second predetermined depth being deeper than the first predetermined depth at which the tip dived in for the aspiration of the homogenization or for the aspiration phase of the sampling step. This configuration allows to avoid to move the tip in an area of the sample container that is different from the one where the defect affecting the previous sample handling was found so as to ensure homogenous intake of volume and allows to avoid aspirating the clots/aggregates potentially previously intaken.

Advantageously, the second predetermined depth is determined by the control unit based on the first predetermined depth.

According to one feature of the invention, in the retry mode, the tip of the pipette is changed or cleaned before retrying the failed step.

According to one feature of the invention, the retry mode comprises at least one monitoring step comprising the same substeps as monitoring step used during homogenization step and/or sampling step.

According to one feature of the invention, in the retry mode, the step of homogenization is repeated if the sampling step failed, which enables to wet the tip end and to increase precision of the intake. Alternatively, in the retry mode, the step of homogenization is not repeated if the sampling step failed in order to avoid additional stress for the cells.

Another object of the invention is a device configured to carry out the automatic sampling method according to the invention, said device comprising at least:
- a first workstation wherein a container, for example a collection tube, containing a non-homogenous biological sample, for example whole blood sample, is loaded,
- a second workstation wherein at least one well, different from the container, is loaded, the well being configured to receive a predetermined volume of the non-homogenous biological sample,
- at least one pipetting unit comprising a pipette equipped with a tip, the pipette being configured to move inside the device between the at least two workstations,
- at least one control unit of the device configured to cooperate and control the pipette unit.

According to one feature of the invention, the tip is removable, which enables to change tip easily and avoid contamination.

According to one feature of the invention, the tip can be disposable, which enables to avoid contamination between steps of the automatic sampling method.

According to one feature of the invention, the pipette unit comprises at least one sensor, preferentially arranged on the body of the pipette and configured to sense and monitor pressure or vacuum inside the tip of the pipette.

According to one feature of the invention, the at least one sensor can be a pressure sensor. According to one feature of the invention, the at least one sensor is arranged on the body of the pipette.

Advantageously, the sensor is configured to detect the gripping of the tip on the pipette, to detect liquid presence and liquid level inside the container. More particularly, the at least one sensor is also configured to control aspiration in terms of clot, foam, bubble, film, air intake, etc.

Specifically, the at least one sensor can detect correct piercing of the foil during piercing step.

According to one feature of the invention, the device is configured to carry out the detection and/or quantification method including the automatic sampling method according to the invention.

According to one feature of the invention, the internal walls of the sample container are coated with lithium heparin. Advantageously, heparin is a commonly used anticoagulant, especially in clinical biochemistry and chemical measurement tests. It is the recommended anticoagulant for chemical measurement in blood or plasma tests, because of its minimal chelating properties, minimal interference with water, and relatively low cation concentration.) Indeed, EDTA (Éthylènediaminetétraacétique), which also used as anticoagulant, cannot be used in specific assay, because said EDTA inhibits stimulation.

Another object of the invention is a method for detecting and/or quantifying analytes in a non-homogenous biological sample, for example whole blood sample, wherein the automatic sampling method according to the invention is implemented and carried out by a device configured to carry out the automatic sampling method according to the invention, said device according to the invention and comprising at least:
- a first workstation wherein a container, for example a collection tube, containing a non-homogenous biological sample, for example whole blood sample, is loaded,
- a second workstation wherein at least one well, different from the container, is loaded, the well being configured to receive a predetermined volume of the non-homogenous biological sample,
- at least one pipetting unit comprising a pipette equipped with a tip, the pipette being configured to move inside the device between the at least two workstations inside said device,
wherein the method comprises a step of detection and/or quantification of an analyte in the nonhomogeneous sample.

According to one feature of the invention, the detection and/or quantification method comprises at least one step of loading at least one support comprising at least one well configured to receive a predetermined volume of non-homogenous biological sample, aspirated from the container, inside the device.

According to one feature of the invention, the detection and/or quantification method comprises at least one step of equipping the pipette with a first tip. Advantageously, if the at least one well is being protected by a protective foil, said first tip is configured to pierce a protective foil being arranged on the well of the at least one support. In that case, if the first tip is removable, the first tip is replaced by a second tip before homogenization step. If the first tip is not removable, said first tip can be cleaned instead.

According to one feature of the invention, the support is a strip, and comprises at least one well and preferably a plurality of wells adjacent to each other.

According to one feature of the invention, the method comprises at least one step of piercing at least one protective foil arranged on the at least one well of the device, with the first tip of the pipette.

According to one feature of the invention, the detection and/or quantification method further comprises a step of removing said first tip and positioning a second tip on the pipette, the second tip being configured to be used in the automatic sampling method during the step of homogenization and for the sampling step. It is advantageous to change the first tip between piercing the protective foil and the automatic sampling method. Indeed, during the piercing, the tip may have been damaged or deformed and might compromise the accuracy of the volume of blood intaken during the aspiration or the dispensing of the sample during the automatic sampling method. Alternatively, the detection and/or quantification method further comprises a step of cleaning said first tip to be configured to be used in the automatic sampling method during the step of homogenization and for the sampling step.

According to one feature of the invention, the dispensing substep of the sampling step is carried out into an empty dedicated well of the support, without changing the first tip or the second tip.

According to one feature of the invention, the detection and/or quantification method further comprises the steps of:
- removing second tip and equipping the pipette with a third tip or cleaning the first tip and
- aspirating a stimulant reagent contained in specific vials and dispensing it into the well containing the non-homogenous biological sample sampled.

The sampling of non-homogenous biological sample is carried out before the pipetting of stimulant reagents. This presents the advantage of using the same conditions for the tip between the different biological sample dispensing into the different wells of the supports, since the wells dedicated for the whole blood sample are already opened by the first tip and empty therefore no carry-over has occurred.

The detection and/or quantification method can be used to quantify interferon (IFN-y) in a TB-IGRA assay (Tuberculosis Interferon Gamma Release Assay). In this application, at least three different supports equipped with wells are loaded in the device. Each support may be in the form of a strip, preferably made of plastic, and comprising a plurality of adjacent wells, one well being dedicated to the whole blood sample.

Another object of the invention is the use of the automatic sampling method according to the invention, to allow quantifying interferon (IFN-y) in a Tuberculosis Interferon Gamma Release Assay in a method according to the invention.

### Brief description of figures

Fig. 1 is a diagram illustrating a first embodiment of the automatic sampling method according to the invention,
Fig. 2 is a diagram illustrating a second embodiment of the automatic sampling method according to the invention,
Fig. 3 is a diagram illustrating a method for detection and/quantification of analytes in a whole blood sample according to the invention,
Fig. 4 illustrates schematically a device according to the invention,

### Detailed description

The invention relates mainly to an automatic sampling method of non-homogenous biological sample intended to be implemented in a method for detection and/quantification of analytes in a non-homogenous biological sample. For these methods, devices such as the ones commercialized by the applicant under the brand VIDAS^{®} can be used.

The automatic sampling method can be carried out immediately after blood collection or can be postponed later, slightly differences in the steps of the method are to be performed and will be identified in the detailed description.

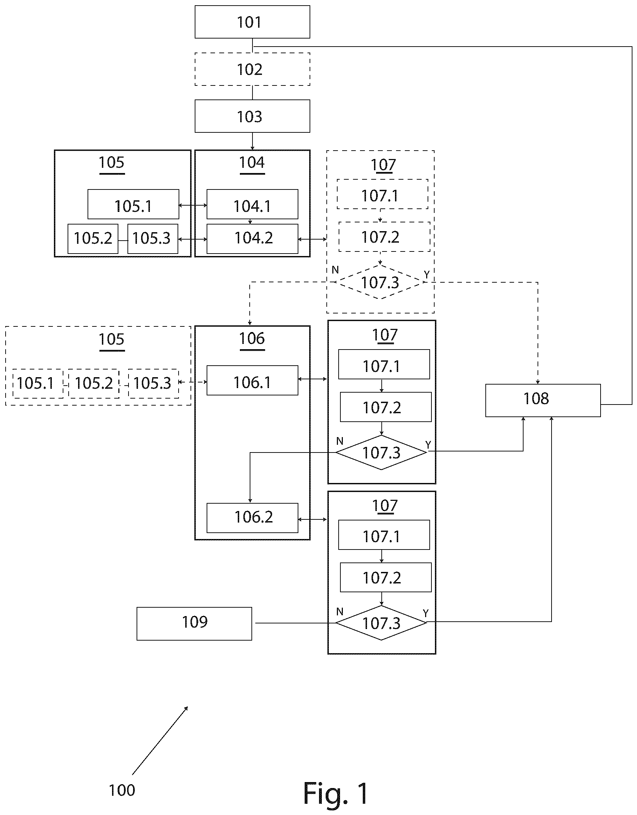

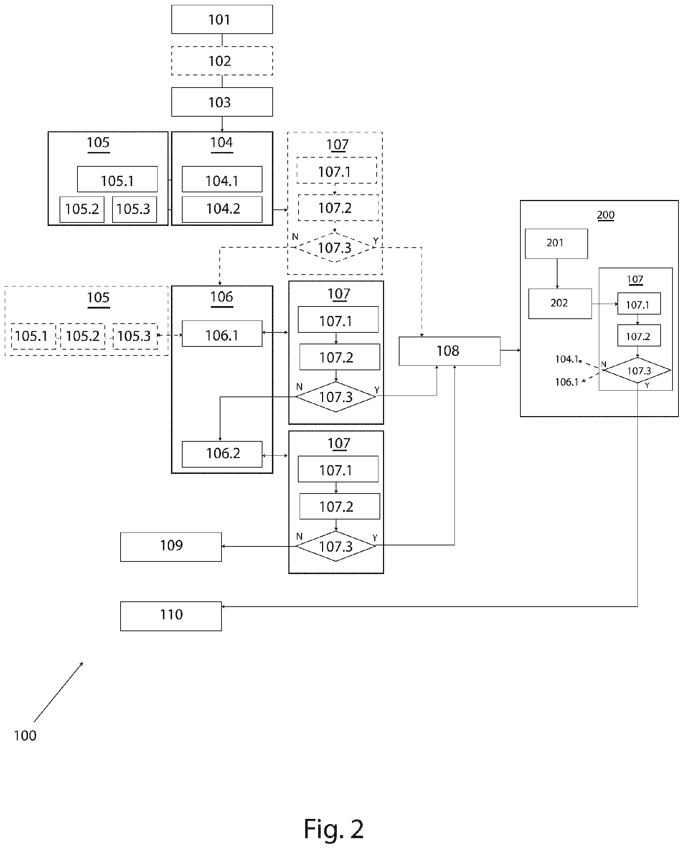

The automatic sampling method will now be detailed in reference with Fig. 1 and Fig. 2.

The automatic sampling method according to the invention was conceived for handling non-homogenous biological sample directly without any prior treatment such as centrifugation, or filtration.

In this description, the non-homogenous biological sample is whole blood sample.

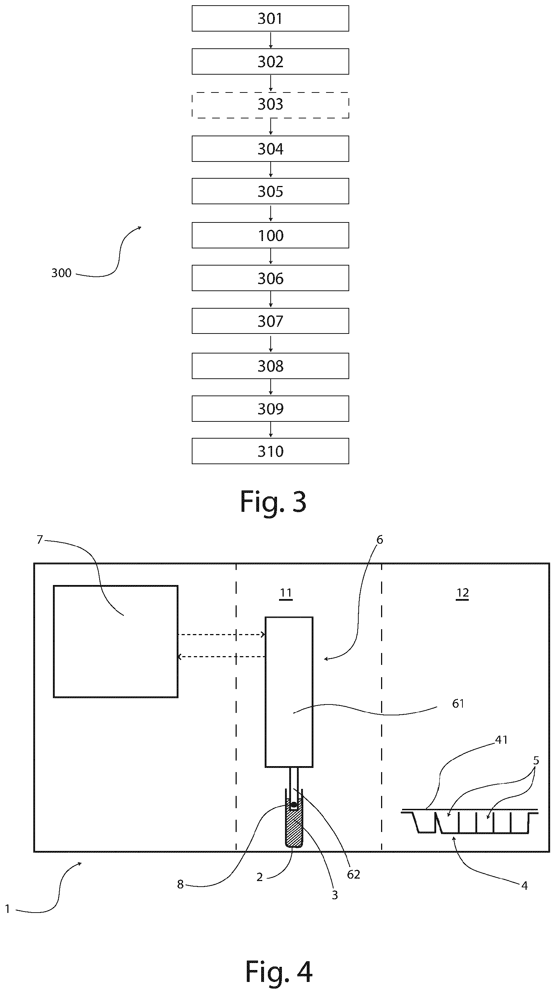

The automatic sampling method 100 comprises at least a step 101 of providing a device 1 illustrated schematically in Fig. 4. Said device 1 comprises at least a first workstation 11 wherein a container 2, for example a collection tube, containing a biological sample 3, preferentially whole blood sample, is loaded, a second workstation 12 wherein at least one well 5, different from the container 2, is loaded, the well 5 being configured to receive a predetermined volume of the sample 3. The device 1 according to the invention further comprises at least one pipetting unit 6 comprising a pipette 61 equipped with a tip 62, the pipette 6 being configured to move inside the device 1 between the at least two workstations 11, 12. According to the invention and as illustrated in Fig. 4, the device 1 also comprises a control unit 7 configured to control the pipette unit 6. The device 1 further comprises at least one sensor 8, preferably a pressure sensor, arranged on the body of the pipette 61 and configured to sense and monitor pressure or vacuum inside the tip 62 of the pipette 61.

The automatic sampling method 100 comprises at least a step 103 of loading the container 2 inside the device 1. Previously to the step 103 of loading, a step of manual inversion 102 is recommended to carry out in order to ensure at least that the coated lithium heparin, which can be applied inside the container 2, came into contact with the whole blood sample 3 in an efficient manner. The manual inversion step 102 is illustrated with dotted line in Fig. 1 and Fig. 2, because manual inversion could be not carried out in another embodiment.

After loading the container 2 (step 103), a step of homogenization 104 is automatically started. The homogenization step 104 comprises at least a first substep 104.1 consisting in the dive of tip 62 inside the container 2 into the biological sample 3 at a first predetermined depth (determined during liquid level monitoring step 105, described below). For example, the first predetermined depth is comprised between 1.6 mmm to 15mm for a maximum volume of the tip of 300µL under the first determined depth. In parallel of the homogenization step 104, a liquid level tracking step 105 is carried out to ensure that the tip 62 end is always immerged in the biological sample 3 during homogenization step 104.

During first substep 104.1 of homogenization step 104, a substep 105.1 of liquid level tracking step 105 is carried out and consists in detecting the liquid height of the biological sample 3 inside the container 2 by the sensor 8.

When the tip 62 reach the first predetermined depth, the control unit 7 orders pipette unit 6 to start several cycles of aspiration and dispensing (substep 104.2 of homogenization step 104) of the biological sample 3 inside the container 2. During the cycles of aspiration and dispensing 104.2, a substep 105.2 and a substep 105.3 of liquid level tracking step 105 are carried out, the substep 105.2 consisting in determining theoretically the first predetermined depth, by the control unit 7, based on at least liquid height and the substep 105.3 consisting in monitoring movements of the tip 62 end inside the container 2, by the control unit 7, so as ensure that the tip 62 moves following the liquid level of the biological sample 3 and stay immerged.

As shown in Fig. 1 and 2, the at least one step of liquid level tracking 105 is carried out during aspiration and/or dispensing 104.2 of homogenization step 104. Optionally, the at least one step of liquid level tracking 105 can be carried out during aspiration phase 106.1 of sampling step 106 (shown on dotted lines the figures).

When the cycles are ended, the control unit 7 orders automatically and directly a sampling step 106 to the pipette unit 6. The sampling step 106 consists in a first phase 106.1 during which the pipette unit 6 aspirates a predetermined volume of biological sample 3 from the container 2 and a second phase 106.2 of dispensing the predetermined volume previously aspirated, in a well 5 distinct from the container 2, the tip 62 of the pipette 61 being the same for the homogenization step 104 and for sampling step 106. In the framework of a TB-IGRA assay, the biological sample is a whole blood sample and the volume of said whole blood sample to be aspirated is around 300 µL for each well 5, for instance in this assay there are three wells in three different supports (strips for example) intended to contain 300 µL of whole blood sample.

As illustrated in Figs 1 and 2, the automatic sampling method 100 further comprises at least one step of monitoring 107 comprising the following substeps :
- a detecting substep 107.1, wherein at least one sensor 8 is configured to detect pressure or vacuum generated inside the tip 62 end of the pipette 61 during the homogenization step 104 (see in dotted line) or the sampling step 106, and to send to control unit 7 at least one pressure value and preferably several pressure values corresponding to detected pressure or vacuum,
- a comparison substep 107.2, wherein the control unit 7 compares the at least pressure value sent with pressure thresholds corresponding to at least one distinctive pressure indicator representative of a characteristic sampling defect, said pressure thresholds being embedded in the control unit 7 and being predetermined by the control unit 7 prior to the automatic sampling method,
- a determination substep 107.3, wherein the control unit determines, based on the comparison substep 107.2, if there is a failure of the homogenization step 104 or the sampling step 106.

In fig. 1 and 2 the steps of monitoring will be illustrated only for sampling step 106 but could be applied to homogenization step 104 as well and in particular for monitoring if total clogging of the tip 62 is happening.

During the detecting substep 107.1, the control unit 7 runs an algorithm that monitors the selected distinctive pressure indicators. If the control unit determines that at least one pressure value measured by the sensor 8, during sampling step 106, is over (Y) at least one determined pressure threshold corresponding to at least one pressure indicator, the control unit 7 triggers an alarm and sampling step 106 is automatically stopped 108. Accordingly, if the control unit 7 determines that at least one pressure value measured by the sensor 8, during sampling step 106, is equal or under (N) at least one determined pressure threshold corresponding to at least one pressure indicator, the sampling step 106 goes on until the control unit 7 considers that the automatic sampling method 100 is completed and considered achieved 109. The monitoring step is carrying out during aspiration phase 106.1 of sampling step as well as during dispensing phase 106.2 of sampling step 106 as it can be seen in Fig. 1 and 2.

In fig. 2 is illustrated automatic sampling method 100 with a retry mode 200. Accordingly, the control unit 7 is configured to command a retry mode 200, consisting in retrying a step (104, 106) of the automatic sampling method 100 if the control unit 7 has determined that the said step (104, 106) is a failure because of the correspondence of measured pressure values with at least one distinctive pressure indicator.

As shown in Fig. 2, in the retry mode 200, the tip 62 of the pipette 61 is changed or cleaned (step 201) before retrying (202) the failed step. During retry mode 200, the steps of liquid level tracking 105 and monitoring 107 are carried out as well, as illustrated in Fig. 2. Furthermore, during retry mode 200, in case of retrying aspiration phase 106.1 of the sampling step 106, the tip 62 of pipette 61 dives into the biological sample at a second determined depth, the second predetermined depth being deeper than the first predetermined depth at which the tip 62 dived in for the aspiration 104.2 of the homogenization step 104 or for the aspiration phase 106.1 of the sampling step 106 that failed.

Moreover, if during monitoring step 107 of the retrying step 202, the control unit 7 considers (step 107.3) that there is still a failure (Y), the automatic sampling method 100 is definitely stopped and considered failed (step 110), the automatic sampling method 100 is then restarted if needed at the beginning with the manual inversion step 102 (optional) or with the homogenization step 104 as illustrated in Fig 2. If during monitoring step 107 of the retrying step 202, the control unit 7 considers (step 107.3) that there is no more failure (N), the automatic sampling method 100 continues to the next step (dotted lines in Fig. 2).

The detection/quantifying method according to the invention will now be described in reference with Fig. 3 and according to the detailed automatic sampling method 100 of the invention. The method 300 of the invention is a method for detecting and/or quantifying analytes in a whole blood sample, after cell stimulation, wherein the automatic sampling method 100 according to the invention is implemented.

According to the invention, the detection and/or quantification method 300 comprises at least one step of loading 301 at least one support 4 comprising at least one well 5 configured to receive a predetermined volume of whole blood sample 3, aspirated from the container 2 inside the device 1.

After the step of loading 301, the step of equipping 302 the pipette 61 with a first tip 62 is carried out, the first tip 62 being configured to pierce (step 303) at least one sealing protection foil 41 covering the at least one well 5 of the support 4. It should be noted that the step 303 of piercing the protective foil is optional since, in some assay, wells are not equipped with such protective foil and are completely opened. The step 303 is then considered optional and is represented in dotted lines in Fig. 3. Furthermore, the detection and/or quantification method 300 further comprises a step of removing 304 said first tip 62 and positioning 305 a second tip 62 on the pipette 61, the second tip 62 being configured to be used in the automatic sampling method 100 during the step of homogenization 104 and for the sampling step 106. After the automatic sampling method 100, the following steps are carried out : removing 306 second tip 62 and equipping 307 the pipette 61 with a third tip and aspirating 308 a stimulant reagent contained in specific vials and dispensing 309 it into the well 5 containing the whole blood sample 3 sampled, ejecting 310 the third tip 62.

Alternatively, in another embodiment (not illustrated) where the tip 62 is not removable, for example the tip being a needle : after the step of loading 301, the step of equipping 302 the pipette 61 with a first tip 62 is carried out, the first tip 62 being configured to pierce (step 303) at least one protection foil 41 covering the at least one well 5 of the support 4. Furthermore, the detection and/or quantification method 300 further comprises a step of cleaning (not illustrated) said first tip 62 in order to ensure that the first tip 62 can be used in the automatic sampling method 100 during the step of homogenization 104 and for the sampling step 106.

After the automatic sampling method 100, the following steps are carried out : cleaning first tip 62 and aspirating 308 a stimulant reagent contained in specific vials and dispensing 309 it into the well 5 containing the whole blood sample 3 sampled.

Alternatively, in another embodiment (not illustrated) where the well(s) is/are not protected by a protective foil : after the step of loading 301, the step of equipping 302 the pipette 61 with a first tip 62 is carried out, said first tip 62 being configured to be used in the automatic sampling method 100 during the step of homogenization 104 and for the sampling step 106. After the automatic sampling method 100, the following steps are carried out : removing 306 first tip 62 and equipping 307 the pipette 61 with a second tip or cleaning first tip 62, and then aspirating 308 a stimulant reagent contained in specific vials and dispensing 309 it into the well 5 containing the whole blood sample 3 sampled, ejecting 310 the second tip 62 or keeping first tip 62.

Of course, the invention is not limited to the embodiments described and shown in the appended figures. Modifications remain possible, notably from the point of view of the constitution of the various elements or by substitution of technical equivalents, without thereby departing from the scope of protection of the invention defined by the claims.

## Claims

1. Automatic sampling method (100) for non-homogenous biological sample (3) contained in a container (2), such as a collection tube, said automatic sampling method (100) comprising the following steps :
- (step 101) providing a device (1) comprising at least one pipetting unit (6) equipped with at least one pipette (61) with a tip (62), a control unit (7) cooperating and controlling the pipetting unit (6),
- (step 103) loading a container (2) containing the non-homogenous biological sample inside the device (1),
- (step 104) starting automatic homogenization inside the device (1), of said non-homogenous biological sample (3), said homogenization (104) comprising the following substeps :
• (104.1) the tip (62) of the pipette (61) dives into the container (2) at a first predetermined depth under the surface of the non-homogenous biological sample (3),
• (104.2) the pipette operates a plurality of cycles of aspirating and dispensing said non-homogenous biological sample (3) into the container (2), wherein in each cycle the pipette (61) aspirates the non-homogenous biological sample (3) at the first predetermined depth,
aspirating the whole volume capacity of the tip (62) and then dispensing it back inside the container (2), the tip (62) end of the pipette (61) is being kept under the surface of the non-homogenous biological sample (3) at the first predetermined depth during the plurality of cycles,
- (step 106) sampling a predetermined volume of non-homogenous biological sample (3) once the plurality of cycles is over, by :
• a first phase (106.1) of aspirating the predetermined volume of non-homogenous biological sample (3) from the container (2), wherein the tip (62) is immerged at the first predetermined depth and
• a second phase (106.2) of dispensing the predetermined volume previously aspirated, in a well (5) distinct from the container (2) containing the non-homogenous biological sample (3)

2. Automatic sampling method according to claim 1, wherein during homogenization step (104), the aspirating is carried out at a first predetermined speed and the dispensing is carried out at a second predetermined speed, the first predetermined speed being different from the second predetermined speed.

3. Automatic sampling method according to claim 1 or 2, comprising at least one step of liquid level tracking (105) consisting in :
- detecting (105.1) the liquid height of the sample inside the container by a sensor (8), and
- determining (105.2) theoretically how deep the tip (62) end must dive and aspirate and dispense non-homogenous biological sample (3) into the container (2) based on said liquid height and/or based on the volume of non-homogenous biological sample (3) to be aspirated/dispensed, and/or based on the volume and size of the container (2), said determination being carried out by the control unit (7),
- monitoring (105.3) movements of the tip (62) end inside the container (2) during homogenization step (104) and/or sampling step (106) and following the liquid height variation inside the tube.

4. Automatic sampling method according to claim 3, wherein the at least one step of liquid level tracking (105) can be carried out during aspiration (104.2) and/or dispensing (104.2) of homogenization step (104) and/or during aspiration phase (106.1) of sampling step (106).

5. Automatic sampling method according to any of the claims 1 to 4, comprising at least one step of monitoring (107) comprising the following substeps :
- a detecting substep (107.1), wherein at least one sensor (8) is configured to detect pressure or vacuum generated inside the tip (62) end of the pipette (61) during the homogenization step (104) and/or the sampling step (106), and to send to control unit (7) at least one pressure value and preferably several pressure values corresponding to detected pressure or vacuum,
- a comparison substep (107.2), wherein the control unit (7) compares the at least one pressure value sent with pressure thresholds corresponding to at least one distinctive pressure indicator representative of a characteristic sampling defect, said pressure thresholds being embedded in the control unit (7) and being predetermined by the control unit (7),
- a determination substep (107.3), wherein the control unit (7) determines, based on the comparison substep (107.2), if there is a failure of the homogenization step (104) or the sampling step (106).

6. Automatic sampling method according to claim 5, wherein for each distinctive pressure indicator correspond at least one pressure threshold.

7. Automatic sampling method according to claims 5 or 6, wherein during the detecting substep (107.1), the control unit (7) runs an algorithm that monitors the selected distinctive pressure indicators.

8. Automatic sampling method according to any of the claims 5 to 7, wherein some selected distinctive pressure indicators are considered characteristic of sampling defects occurring during aspiration (104.2, 106.1) and some others are considered characteristic of sampling defects occurring during dispensing (104.2, 106.2) and some others are for both, according to the step aspiration (104.2, 106.1) or dispensing (104.2, 106.2) during which the monitoring step (107) is carried out, the control unit (7) selects what distinctive pressure indicators are the best to be monitored.

9. Automatic sampling method according to any of the claims 5 to 8, wherein if the control unit (7) determines that at least one pressure value measured by the sensor (8), during sampling step (106), is over at least one determined pressure threshold corresponding to at least one pressure indicator, the control unit (7) triggers an alarm and sampling step (106) is automatically stopped (step 108) and if the control unit (7) determines that at least one pressure value measured by the sensor (8), during sampling step (106), is equal or under at least one determined pressure threshold corresponding to at least one pressure indicator, the sampling step (106) goes on until the control unit (7) considers that the automatic sampling method (100) is completed and considered achieved (step 109).

10. Automatic sampling method according to any of the claims 5 to 9, wherein the step of monitoring (107) is carried out during aspiration (104.2) of homogenization step (104) and/or during dispensing (104.2) of homogenization step (104) and/or during aspiration phase (106.1) of sampling step (106) and/or during dispensing phase (106.2) of sampling step (106).

11. Automatic sampling method according to claims 1 to 10, wherein the control unit (7) is configured to command a retry mode (200), consisting in retrying an identified step (104, 106) of the automatic sampling method (100), said step (104, 106) being identified by the control unit (7) if said step (104, 106) is determined failed by the control unit (7), because of the correspondence of measured pressure value with at least one determined pressure threshold.

12. Automatic sampling method according to claim 11, wherein in the retry mode, if an aspiration step (104.2, 106.1) is to be retried, the tip (62) of pipette (61) dives into the non-homogenous biological sample (3) at a second determined depth, the second predetermined depth being deeper than the first predetermined depth at which the tip (62) dives in for the aspiration (104.2) of the homogenization step (104) or for the aspiration phase (106.1) of the sampling step (106).

13. Device (1) configured to carry out the automatic sampling method (100) according to claims 1 to 12, said device (1) comprising at least :
- a first workstation (11) wherein a container (2), for example a collection tube, containing a non-homogenous biological sample (3), for example whole blood sample, is loaded,
- a second workstation (12) wherein at least one well (5), different from the container (2), is loaded, the well (5) being configured to receive a predetermined volume of the non-homogenous biological sample (3),
- at least one pipetting unit (6) comprising a pipette (61) equipped with a tip (62), the pipette (61) being configured to move inside the device (1) between the at least two workstations (11, 12),
- at least one control unit (7) of the device (1) configured to cooperate and control the pipette unit (6).

14. Method for detecting and/or quantifying analytes in a non-homogenous biological sample (3), for example a whole blood sample, wherein the automatic sampling method (100) according to the claims 1 to 12 is implemented, and carried out by a device (1) according to claim 13, configured to carry out the automatic sampling method (100),
wherein the method comprises a step of detection and/or quantification of an analyte in the nonhomogeneous sample.

15. Use of the automatic sampling method (100) according to any of the claims 1 to 12, to allow quantifying interferon (IFN-y) in a Tuberculosis Interferon Gamma Release Assay in a method according to claim 14.

## Patentansprüche

1. Automatisches Probenahmeverfahren (100) für nicht homogene biologische Proben (3), die in einem Behälter (2), wie etwa einem Sammelröhrchen, enthalten sind, wobei das automatische Probenahmeverfahren (100) folgende Schritte umfasst:
- (Schritt 101) Bereitstellen einer Vorrichtung (1), umfassend wenigstens eine Pipettiereinheit (6), die mit wenigstens einer Pipette (61) mit einer Spitze (62) ausgestattet ist, eine Steuereinheit (7), die mit der Pipettiereinheit (6) zusammenwirkt und diese steuert,
- (Schritt 103) Einsetzen eines Behälters (2), die die nicht homogene biologische Probe enthält, in die Vorrichtung (1),
- (Schritt 104) Beginnen der automatischen Homogenisierung der nicht homogenen biologischen Probe (3) in der Vorrichtung (1), wobei die Homogenisierung (104) folgende Teilschritte umfasst:
• (104.1) die Spitze (62) der Pipette (61) taucht mit einer ersten vorbestimmten Tiefe unter die Oberfläche der nicht homogenen biologischen Probe (3) in den Behälter (2) ein,
• (104.2) die Pipette führt mehrere Zyklen des Ansaugens und Abgebens der nicht homogenen biologischen Probe (3) in den Behälter (2) durch, wobei in jedem Zyklus die Pipette (61) die nicht homogene biologische Probe (3) in der ersten vorbestimmten Tiefe ansaugt, wobei das gesamte Fassungsvermögen der Spitze (62) angesaugt wird, und sie dann wieder in den Behälter (2) abgibt, wobei das Ende (62) der Pipette (61) während der mehreren Zyklen unter der Oberfläche der nicht homogenen biologischen Probe (3) in der ersten vorbestimmten Tiefe gehalten wird,
- (Schritt 106) Beproben eines vorbestimmten Volumens einer nicht homogenen biologischen Probe (3), sobald die mehreren Zyklen abgeschlossen sind, durch:
• eine erste Phase (106.1) des Ansaugens des vorbestimmten Volumens der nicht homogenen biologischen Probe (3) aus dem Behälter (2), wobei die Spitze (62) mit der ersten vorbestimmten Tiefe eingetaucht wird, und
• eine zweite Phase (106.2) des Abgebens des zuvor angesaugten vorbestimmten Volumens in ein Gefäß (5), das von dem Behälter (2) verschieden ist, der die nicht homogene biologische Probe (3) enthält.

2. Automatisches Probenahmeverfahren gemäß Anspruch 1, wobei während des Homogenisierungsschritts (104) das Ansaugen mit einer ersten vorbestimmten Geschwindigkeit und das Abgeben mit einer zweiten vorbestimmten Geschwindigkeit durchgeführt wird, wobei die erste vorbestimmte Geschwindigkeit von der zweiten vorbestimmten Geschwindigkeit verschieden ist.

3. Automatisches Probenahmeverfahren gemäß Anspruch 1 oder 2, wenigstens einen Schritt des Verfolgens des Flüssigkeitsstandes (105) umfassend, bestehend aus:
- Erfassen (105.1) der Flüssigkeitshöhe der Sonde im Behälter durch einen Sensor (8) und
- theoretisches Bestimmen (105.2), wie tief das Ende der Spitze (62) eintauchen und die nicht homogene biologische Probe (3) im Behälter (2) ansaugen und in diesen abgeben muss, basierend auf der Flüssigkeitshöhe und/oder basierend auf dem Volumen der nicht homogenen biologischen Probe (3), die angesaugt/abgegeben werden soll, und/oder basierend auf dem Volumen und der Größe des Behälters (2), wobei das Bestimmen durch die Steuereinheit (7) ausgeführt wird,
- Überwachen (105.3) der Bewegungen der Spitze (62) im Behälter (2) während des Homogenisierungsschritts (104) und/oder des Probenahmeschritts (106) und Verfolgen der Schwankungen der Flüssigkeitshöhe im Röhrchen.

4. Automatisches Probenahmeverfahren gemäß Anspruch 3, wobei der wenigstens eine Schritt des Verfolgens des Flüssigkeitsstandes (105) während des Ansaugens (104.2) und/oder Abgebens (104.2) des Homogenisierungsschritts (104) und/oder während der Ansaugphase (106.1) des Probenahmeschritts (106) durchgeführt werden kann.

5. Automatisches Probenahmeverfahren gemäß einem der Ansprüche 1 bis 4, wenigstens einen Überwachungsschritt (107) umfassend, der die folgenden Teilschritte umfasst:
- einen Detektions-Teilschritt (107.1), wobei wenigstens ein Sensor (8) dafür ausgelegt ist, den während des Homogenisierungsschritts (104) und/oder des Probenahmeschritts (106) im Spitzenende (62) der Pipette (61) erzeugten Druck oder Unterdruck zu erfassen und wenigstens einen Druckwert und vorzugsweise mehrere Druckwerte, die dem erfassten Druck oder Unterdruck entsprechen, an die Steuereinheit (7) zu senden,
- einen Vergleichs-Teilschritt (107.2), wobei die Steuereinheit (7) den wenigstens einen gesendeten Druckwert mit Druckschwellenwerten vergleicht, die wenigstens einem Differenzdruckindikator entsprechen, der für einen charakteristischen Probenahmefehler repräsentativ ist, wobei die Druckschwellenwerte in die Steuereinheit (7) eingebettet sind und durch die Steuereinheit (7) vorbestimmt sind,
- einen Bestimmungs-Teilschritt (107.3), wobei die Steuereinheit (7) basierend auf dem Vergleichs-Teilschritt (107.2) bestimmt, ob ein Fehler des Homogenisierungsschritts (104) oder des Probenahmeschritts (106) vorliegt.

6. Automatisches Probenahmeverfahren gemäß Anspruch 5, wobei jedem Differenzdruckindikator wenigstens ein Druckschwellenwert entspricht.

7. Automatisches Probenahmeverfahren gemäß Anspruch 5 oder 6, wobei während des Detektions-Teilschritts (107.1) die Steuereinheit (7) einen Algorithmus ausführt, der die ausgewählten Differenzdruckindikatoren überwacht.

8. Automatisches Probenahmeverfahren gemäß einem der Ansprüche 5 bis 7, wobei einige ausgewählte Differenzdruckindikatoren als charakteristisch für Probenahmefehler angesehen werden, die während des Ansaugens (104.2, 106.1) auftreten, und einige andere als charakteristisch für Probenahmefehler angesehen werden, die während des Abgebens (104.2, 106.2) auftreten, und einige andere für beide sind, gemäß dem Schritt des Ansaugens (104.2, 106.1) oder Abgebens (104.2, 106.2), während dem der Überwachungsschritt (107) ausgeführt wird, wobei die Steuereinheit (7) wählt, welche Differenzdruckindikatoren am besten überwacht werden sollten.

9. Automatisches Probenahmeverfahren gemäß einem der Ansprüche 5 bis 8, wobei, wenn die Steuereinheit (7) bestimmt, dass wenigstens ein vom Sensor (8) gemessener Druckwert während des Probenahmeschritts (106) über wenigstens einem bestimmten Druckschwellenwert liegt, der wenigstens einem Druckindikator entspricht, die Steuereinheit (7) einen Alarm auslöst und der Probenahmeschritt (106) automatisch gestoppt wird (Schritt 108), und wobei, wenn die Steuereinheit (7) bestimmt, dass wenigstens ein vom Sensor (8) gemessener Druckwert während des Probenahmeschritts (106) niedriger oder gleich wenigstens einem bestimmten Druckschwellenwert ist, der wenigstens einem Druckindikator entspricht, der Probenahmeschritt (106) fortgesetzt wird, bis die Steuereinheit (7) feststellt, dass das automatische Probenahmeverfahren (100) abgeschlossen und als erfolgreich angesehen wird (Schritt 109).

10. Automatisches Probenahmeverfahren gemäß einem der Ansprüche 5 bis 9, wobei der Schritt des Überwachens (107) während des Ansaugens (104.2) des Homogenisierungsschritts (104) und/oder während des Abgebens (104.2) des Homogenisierungsschritts (104) und/oder während der Ansaugphase (106.1) des Probenahmeschritts (106) und/oder während der Abgabephase (106.2) des Probenahmeschritts (106) durchgeführt wird.

11. Automatisches Probenahmeverfahren gemäß Anspruch 1 bis 10, wobei die Steuereinheit (7) dafür ausgelegt ist, einen Wiederholungsmodus (200) zu steuern, der darin besteht, einen identifizierten Schritt (104, 106) des automatischen Probenahmeverfahrens (100) zu wiederholen, wobei der Schritt (104, 106) durch die Steuereinheit (7) identifiziert wird, wenn der Schritt (104, 106) durch die Steuereinheit (7) als fehlgeschlagen bestimmt wird, aufgrund der Übereinstimmung des gemessenen Druckwerts mit wenigstens einem bestimmten Druckschwellenwert.

12. Automatisches Probenahmeverfahren gemäß Anspruch 11, wobei im Wiederholungsmodus, wenn ein Ansaugschritt (104.2, 106.1) wiederholt werden soll, die Spitze (62) der Pipette (61) in die nicht homogene biologische Probe (3) mit einer zweiten bestimmten Tiefe eintaucht, wobei die zweite vorbestimmte Tiefe tiefer als die erste vorbestimmte Tiefe ist, bei der die Spitze (62) für das Ansaugen (104.2) des Homogenisierungsschritts (104) oder für die Ansaugphase (106.1) des Probenahmeschritts (106) eintaucht.

13. Vorrichtung (1), die dafür ausgelegt ist, das automatische Probenahmeverfahren (100) gemäß Anspruch 1 bis 12 durchzuführen, wobei die Vorrichtung (1) wenigstens umfasst:
- eine erste Arbeitsstation (11), in die ein Behälter (2), beispielsweise ein Sammelröhrchen, mit einer nicht homogenen biologischen Probe (3), beispielsweise einer Vollblutprobe, eingesetzt wird,
- eine zweite Arbeitsstation (12), in die wenigstens ein Gefäß (5), das von dem Behälter (2) verschieden ist, eingesetzt wird, wobei das Gefäß (5) dafür ausgelegt ist, ein vorbestimmtes Volumen der nicht homogenen biologischen Probe (3) aufzunehmen,
- wenigstens eine Pipettiereinheit (6), umfassend eine Pipette (61), die mit einer Spitze (62) ausgerüstet ist, wobei die Pipette (61) dafür ausgelegt ist, sich innerhalb der Vorrichtung (1) zwischen den wenigstens zwei Arbeitsstationen (11, 12) zu bewegen,
- wenigstens eine Steuereinheit (7) der Vorrichtung (1), die dafür ausgelegt ist, mit der Pipettiereinheit (6) zusammenzuwirken und diese zu steuern.

14. Verfahren zum Detektieren und/oder Quantifizieren von Analyten in einer nicht homogenen biologischen Probe (3), beispielsweise einer Vollblutprobe, wobei das automatische Probenahmeverfahren (100) gemäß Anspruch 1 bis 12 implementiert wird und durch eine Vorrichtung (1) gemäß Anspruch 13 ausgeführt wird, die dafür ausgelegt ist, das automatische Probenahmeverfahren (100) auszuführen,
wobei das Verfahren einen Schritt des Detektierens und/oder des Quantifizierens eines Analyten in der nicht homogenen Probe umfasst.

15. Verwenden des automatischen Probenahmeverfahrens (100) gemäß einem der Ansprüche 1 bis 12, um die Quantifizierung von Interferon (IFN-y) in einem Tuberkulose-Interferon-Gamma-Freisetzungstest in einem Verfahren gemäß Anspruch 14 zu ermöglichen.

## Revendications

1. Procédé d'échantillonnage automatique (100) d'un échantillon biologique non homogène (3) contenu dans un récipient (2), tel qu'un tube de collecte, ledit procédé d'échantillonnage automatique (100) comprenant les étapes suivantes :
- (étape 101) la fourniture d'un dispositif (1) comprenant au moins une unité de pipetage (6) équipée d'au moins une pipette (61) avec un embout (62), une unité de commande (7) coopérant et commandant l'unité de pipetage (6),
- (étape 103) le chargement d'un récipient (2) contenant l'échantillon biologique non homogène à l'intérieur du dispositif (1),
- (étape 104) le démarrage de l'homogénéisation automatique à l'intérieur du dispositif (1), dudit échantillon biologique non homogène (3), ladite homogénéisation (104) comprenant les sous-étapes suivantes :
• (104.1) l'embout (62) de la pipette (61) plonge dans le récipient (2) à une première profondeur prédéterminée sous la surface de l'échantillon biologique non homogène (3),
• (104.2) la pipette effectue plusieurs cycles d'aspiration et de distribution de l'échantillon biologique non homogène (3) dans le récipient (2), la pipette (61) aspirant à chaque cycle l'échantillon biologique non homogène (3) à la première profondeur prédéterminée, dans la totalité du volume de l'embout (62), puis le distribuant à nouveau dans le récipient (2), l'extrémité de l'embout (62) de la pipette (61) étant maintenue sous la surface de l'échantillon biologique non homogène (3) à la première profondeur prédéterminée pendant la pluralité de cycles,
- (étape 106) l'échantillonnage d'un volume prédéterminé d'échantillon biologique non homogène (3) une fois la pluralité de cycles terminée, par :
• une première phase (106.1) d'aspiration du volume prédéterminé d'échantillon biologique non homogène (3) à partir du récipient (2), dans laquelle l'embout (62) est immergé à la première profondeur prédéterminée et
• une deuxième phase (106.2) de distribution du volume prédéterminé précédemment aspiré, dans un puits (5) distinct du récipient (2) contenant l'échantillon biologique non homogène (3)

2. Procédé d'échantillonnage automatique selon la revendication 1, dans lequel, au cours de l'étape d'homogénéisation (104), l'aspiration est effectuée à une première vitesse prédéterminée et la distribution est effectuée à une deuxième vitesse prédéterminée, la première vitesse prédéterminée étant différente de la deuxième vitesse prédéterminée.

3. Procédé d'échantillonnage automatique selon la revendication 1 ou 2, comprenant au moins une étape de suivi du niveau de liquide (105) consistant à :
- détecter (105.1) la hauteur de liquide de l'échantillon à l'intérieur du récipient à l'aide d'un capteur (8), et
- déterminer (105.2) théoriquement à quelle profondeur l'extrémité de l'embout (62) doit plonger et aspirer et distribuer l'échantillon biologique non homogène (3) dans le récipient (2) sur la base de ladite hauteur de liquide et/ou sur la base du volume de l'échantillon biologique non homogène (3) à aspirer/distribuer, et/ou sur la base du volume et de la taille du récipient (2), cette détermination étant effectuée par l'unité de commande (7),
- surveiller (105.3) les mouvements de l'extrémité de l'embout (62) à l'intérieur du récipient (2) au cours de l'étape d'homogénéisation (104) et/ou de l'étape d'échantillonnage (106) et suivre la variation de la hauteur du liquide à l'intérieur du tube.

4. Procédé d'échantillonnage automatique selon la revendication 3, dans laquelle l'au moins une étape de suivi du niveau de liquide (105) peut être effectuée pendant l'aspiration (104.2) et/ou la distribution (104.2) de l'étape d'homogénéisation (104) et/ou pendant la phase d'aspiration (106.1) de l'étape d'échantillonnage (106).

5. Procédé d'échantillonnage automatique selon l'une quelconque des revendications 1 à 4, comprenant au moins une étape de surveillance (107) comprenant les sous-étapes suivantes :
- une sous-étape de détection (107.1), dans laquelle au moins un capteur (8) est configuré pour détecter la pression ou le vide généré(e) à l'intérieur de l'embout (62) de la pipette (61) pendant l'étape d'homogénéisation (104) et/ou l'étape d'échantillonnage (106), et pour envoyer à l'unité de commande (7) au moins une valeur de pression et, de préférence, plusieurs valeurs de pression correspondant à la pression ou au vide détecté(e),
- une sous-étape de comparaison (107.2), dans laquelle l'unité de commande (7) compare l'au moins une valeur de pression envoyée à des seuils de pression correspondant à au moins un indicateur de pression distinctif représentatif d'un défaut d'échantillonnage caractéristique, lesdits seuils de pression étant intégrés dans l'unité de commande (7) et étant prédéterminés par l'unité de commande (7),
- une sous-étape de détermination (107.3), dans laquelle l'unité de commande (7) détermine, sur la base de la sous-étape de comparaison (107.2), si l'étape d'homogénéisation (104) ou l'étape d'échantillonnage (106) a échoué.

6. Procédé d'échantillonnage automatique selon la revendication 5, dans lequel à chaque indicateur de pression distinctif correspond au moins un seuil de pression.

7. Procédé d'échantillonnage automatique selon les revendications 5 ou 6, dans lequel, au cours de la sous-étape de détection (107.1), l'unité de commande (7) exécute un algorithme qui surveille les indicateurs de pression distinctifs sélectionnés.

8. Procédé d'échantillonnage automatique selon l'une quelconque des revendications 5 à 7, dans lequel certains indicateurs de pression distinctifs sélectionnés sont considérés comme caractéristiques des défauts d'échantillonnage survenant pendant l'aspiration (104.2, 106.1) et d'autres sont considérés comme caractéristiques des défauts d'échantillonnage survenant pendant la distribution (104.2, 106.2) et d'autres sont pour les deux, selon l'étape d'aspiration (104.2, 106.1) ou de distribution (104.2, 106.2) pendant laquelle l'étape de surveillance (107) est exécutée, l'unité de commande (7) sélectionne les indicateurs de pression distinctifs qui sont les mieux adaptés à la surveillance.

9. Procédé d'échantillonnage automatique selon l'une quelconque des revendications 5 à 8, dans lequel si l'unité de commande (7) détermine qu'au moins une valeur de pression mesurée par le capteur (8), lors de l'étape d'échantillonnage (106), est supérieure à au moins un seuil de pression déterminé correspondant à au moins un indicateur de pression, l'unité de commande (7) déclenche une alarme et l'étape d'échantillonnage (106) est automatiquement interrompue (étape 108) et si l'unité de commande (7) détermine qu'au moins une valeur de pression mesurée par le capteur (8), pendant l'étape d'échantillonnage (106), est égale ou inférieure à au moins un seuil de pression déterminé correspondant à au moins un indicateur de pression, l'étape d'échantillonnage (106) se poursuit jusqu'à ce que l'unité de commande (7) considère que le procédé d'échantillonnage automatique (100) est achevé et considéré comme réalisé (étape 109).

10. Procédé d'échantillonnage automatique selon l'une quelconque des revendications 5 à 9, dans lequel l'étape de surveillance (107) est effectuée pendant l'aspiration (104.2) de l'étape d'homogénéisation (104) et/ou pendant la distribution (104.2) de l'étape d'homogénéisation (104) et/ou pendant la phase d'aspiration (106.1) de l'étape d'échantillonnage (106) et/ou pendant la phase de distribution (106.2) de l'étape d'échantillonnage (106).

11. Procédé d'échantillonnage automatique selon les revendications 1 à 10, dans lequel l'unité de commande (7) est configurée pour ordonner un mode de réessai (200), consistant à réessayer une étape identifiée (104, 106) du procédé d'échantillonnage automatique (100), ladite étape (104, 106) étant identifiée par l'unité de commande (7) si ladite étape (104, 106) est déterminée comme ayant échoué par l'unité de commande (7), en raison de la correspondance de la valeur de pression mesurée avec au moins un seuil de pression déterminé.

12. Procédé d'échantillonnage automatique selon la revendication 11, dans lequel, dans le mode de réessai, si une étape d'aspiration (104.2, 106.1) doit être réessayée, l'embout (62) de la pipette (61) plonge dans l'échantillon biologique non homogène (3) à une deuxième profondeur déterminée, la deuxième profondeur prédéterminée étant plus profonde que la première profondeur prédéterminée à laquelle l'embout (62) plonge pour l'aspiration (104.2) de l'étape d'homogénéisation (104) ou pour la phase d'aspiration (106.1) de l'étape d'échantillonnage (106).

13. Dispositif (1) configuré pour mettre en œuvre le procédé d'échantillonnage automatique (100) selon les revendications 1 à 12, ledit dispositif (1) comprenant au moins :
- un premier poste de travail (11) dans lequel est chargé un récipient (2), par exemple un tube de collecte, contenant un échantillon biologique non homogène (3), par exemple un échantillon de sang total,
- un deuxième poste de travail (12) dans lequel au moins un puits (5), différent du récipient (2), est chargé, le puits (5) étant configuré pour recevoir un volume prédéterminé de l'échantillon biologique non homogène (3),
- au moins une unité de pipetage (6) comprenant une pipette (61) équipée d'un embout (62), la pipette (61) étant configurée pour se déplacer à l'intérieur du dispositif (1) entre les au moins deux postes de travail (11, 12),
- au moins une unité de commande (7) du dispositif (1) configurée pour coopérer avec l'unité de pipette (6) et la commander.

14. Procédé de détection et/ou de quantification d'analytes dans un échantillon biologique non homogène (3), par exemple un échantillon de sang total, dans lequel le procédé d'échantillonnage automatique (100) selon les revendications 1 à 12 est mis en œuvre et exécuté par un dispositif (1) selon la revendication 13, configuré pour mettre en œuvre le procédé d'échantillonnage automatique (100), dans lequel le procédé comprend une étape de détection et/ou de quantification d'un analyte dans l'échantillon non homogène.

15. Utilisation du procédé d'échantillonnage automatique (100) selon l'une quelconque des revendications 1 à 12, pour permettre la quantification de l'interféron (IFN-y) dans un test de libération d'interféron gamma pour la tuberculose dans un procédé selon la revendication 14.
